# EUROPEAN PATENT APPLICATION

(11) **EP 4 576 358 A1**
(43) Date of publication of application: **25.06.2025**
(21) Application number: 24200018.0
(22) Date of filing: 12.09.2024
(51) Int. Cl.: H01M 50/211, H01M 50/503, H01M 50/505, H01M 50/507, H01M 50/522, H01M 50/526

(54) **BUSBAR AND BATTERY MODULE INCLUDING SAME**

(30) Priority: 22.12.2023 KR 20230190382
(71) Applicant: LG Energy Solution, Ltd., Seoul 07335 (KR)
(72) Inventor: HAN, SANGWOO, 34122 DAEJEON (KR); KEUM, MINKEUN, 34122 DAEJEON (KR); PARK, HYUNGKEUN, 34122 DAEJEON (KR); SHIN, JINHWAN, 34122 DAEJEON (KR); YUN, KWANGSEOK, 34122 DAEJEON (KR); JEON, SEUNGHO, 34122 DAEJEON (KR); KIM, JIYONG, 34122 DAEJEON (KR); BAE, JAEIN, 34122 DAEJEON (KR); SHIN, YONG SHIK, 34122 (KR)
(74) Representative: Plasseraud IP

(57) **Abstract**

A busbar according to an embodiment of the present disclosure includes: a first conductor layer made of a first metal; and a second conductor layer made of a second metal different from the first metal and stacked and fixed to one surface of the first conductor layer, wherein, on one surface of the first conductor layer to which the second conductor layer is fixed, the first conductor layer has an exposed area where the first metal is exposed.

## Description

### TECHNICAL FIELD

The present disclosure relates to a busbar and a battery module including the same, and more specifically, to a busbar made of dissimilar metals and a battery module including the same.

### BACKGROUND

A secondary battery means a battery capable of charging/discharging, unlike a non-rechargeable primary battery, and is applied not only to portable devices but also to electric vehicles (EV, Electric Vehicle) and hybrid vehicles (HEV, Hybrid Electric Vehicle) that are driven by an electric drive source.

Currently, widely used secondary batteries include lithium ion batteries, lithium polymer batteries, nickel-cadmium batteries, nickel-hydrogen batteries, nickel-zinc batteries, and the like. The operating voltage of a unit secondary battery cell, i.e., a unit battery cell is about 2.5V-4.2V. Accordingly, when higher output voltage is required, a plurality of battery cells may be connected in series to construct a battery pack. Additionally, according to the charge/discharge capacity required for the battery pack, a plurality of battery cells may be connected in parallel to construct a battery pack. Accordingly, the number of battery cells included in the battery pack may be variously set according to the required output voltage or charge/discharge capacity.

When constructing a battery pack by connecting a plurality of battery cells in series/in parallel, it is general to first construct a battery module including at least one battery cell, preferably a plurality of battery cells, and then construct a battery pack using at least one such battery module with the addition of other components. Herein, the battery module refers to a component in which a plurality of battery cells are connected in series or in parallel, and the battery pack refers to a component in which a plurality of battery modules are connected in series or in parallel to increase the capacity and output.

A battery module is configured by electrically connecting a plurality of cells using a busbar, and the electrode leads of battery cells are connected to the busbar.

However, when the electrode lead of a battery cell is connected to the busbar, the electrode lead made of a different material of metal from the busbar is bonded to the busbar, which may increase the incidence of cracks and deteriorate the weldability, as well as introduce galvanic corrosion at the welded interface.

### SUMMARY

The present disclosure is directed to addressing an issue associated with the related art, and to providing a busbar with improved weldability, to provide a better electric conduction and improve durability, and a battery module including the same.

The busbar according to the invention includes: a first conductor layer made of a first metal, the first conductor layer having a first lateral edge and a second lateral edge opposite the first lateral edge, and a main surface extending between the first and second lateral edges, and a second conductor layer made of a second metal different from the first metal and stacked and fixed to one surface of the first conductor layer.

The second conductor layer extends from the first lateral edge of the first conductor layer toward the second lateral edge, leaving an exposed area of the first conductor layer where the first metal is exposed, said exposed area of the first conductor layer extending from the second lateral edge of the first conductor layer toward the first lateral edge.

The busbar according to the invention may comprise one or more of the following features, in any technically feasible combination.

The busbar may be a clad metal busbar.

The exposed area may extend over a part of the main surface of the first conductor layer.

The part of the main surface of the first conductor layer over which the second conductor layer extends may comprise between 50% and 80% of a total area of the main surface of the first conductor layer.

The first metal or the second metal may comprise aluminum.

The first metal or the second metal may comprise copper.

The first conductor layer may have a through hole.

The through hole may be arranged to accommodate at least one of the electrode leads of a battery cell.

Notably, at least one transversal dimension of the through hole is higher than a corresponding dimension of an electrode lead destined to extend through the through hole.

The exposed area may extend for second lateral edge of the first conductor layer to the through hole.

The second conductor layer may include: a first portion and second and third portions bent at both ends of the first portion and extending in a direction of the exposed area of the first conductor layer.

The first portion of the second conductor layer may be disposed in parallel with the exposed area of the first conductor layer.

The first conductor layer may have the through hole.

The first portion of the second conductor layer and the exposed area of the first conductor layer may be disposed on opposite sides of the through hole.

The first conductor layer and the second conductor layer may heat bonded to each other.

Alternatively, the first conductor layer and the second conductor layer may be fixed to each other through another fixation method.

The invention also relates to a battery module including: a battery cell stack in which a plurality of battery cells are stacked; a module case for accommodating the battery cell stack; and a busbar for electrically connecting the battery cells, wherein the busbar includes: a first conductor layer made of a first metal, the first conductor layer having a first lateral edge and a second lateral edge opposite the first lateral edge, and a main surface extending between the first and second lateral edges; and a second conductor layer made of a second metal different from the first metal and stacked and fixed to one surface of the first conductor layer, wherein: the second conductor layer extends from the first lateral edge of the first conductor layer toward the second lateral edge, leaving an exposed area of the first conductor layer where the first metal is exposed, said exposed area of the first conductor layer extending from the second lateral edge of the first conductor layer toward the first lateral edge; an electrode lead of the battery cell made of the first metal is coupled to the exposed area of the first conductor layer; and an electrode lead of the battery cell made of the second metal is coupled to the second conductor layer.

The battery module may further include a terminal busbar made of the first metal.

The battery module may also include an electrode lead of the battery cell made of the first metal coupled to the terminal busbar.

The battery module may further include a terminal busbar made of the second metal.
and the battery module may also include an electrode lead of the battery cell made of the second metal coupled to the terminal busbar.

The battery module may further include a busbar frame disposed on one side of the battery cell stack, and the busbar may be disposed on the busbar frame.

In the busbar and battery module according to an embodiment of the present disclosure, the electrode leads and the busbar are homogeneously welded, thereby improving weldability, electrical conduction and mechanical resistance.

### BRIEF DESCRIPTION OF THE DRAWINGS

FIG. 1 is a perspective view of a battery module according to an embodiment of the present disclosure.
FIG. 2 is an exploded perspective view of a battery module according to an embodiment of the present disclosure.
FIG. 3 is a perspective view of a battery cell in one embodiment of the present disclosure.
FIG. 4 is a perspective view of a terminal busbar in one embodiment of the present disclosure.
FIG. 5 is a perspective view of an insulating cover and an end plate in one embodiment of the present disclosure.
FIG. 6 is a detailed view of a busbar frame in one embodiment of the present disclosure.
FIG. 7 is a diagram illustrating a busbar to which electrode leads are coupled in one embodiment of the present disclosure.
FIG. 8 is a diagram illustrating a busbar in one embodiment of the present disclosure.
FIG. 9 is a cross-sectional view taken along line A-A in FIG. 8.
FIG. 10 is a rear view of FIG. 8.
FIG. 11 is a diagram illustrating a busbar in another embodiment of the present disclosure.
FIG. 12 is a diagram illustrating a busbar (terminal busbar) bonding plate in one embodiment of the present disclosure.

### DETAILED DESCRIPTION

The advantages, features of the present disclosure and methods for achieving the same will become apparent from the following description of embodiments given in detail in conjunction with the accompanying drawings. However, the present disclosure is not limited to the embodiments described herein but may be embodied in many different forms. Rather, the embodiments disclosed herein are provided in order to ensure that the disclosure becomes thorough and perfect and to ensure that the scope of the present disclosure is sufficiently delivered to those skilled in the technical field to which the present disclosure pertains. The present disclosure is defined only by the claims. Accordingly, in some embodiments, well-known process stages, well-known device structures, and well-known techniques are not specifically described in order to avoid ambiguous interpretation of the present disclosure. Like reference numerals refer to like elements throughout the specification.

In the drawings, in order to clearly express a plurality of layers and regions, the thickness may be exaggerated. Like reference numerals refer to like portions throughout the specification. It will be understood that when an element such as a layer, film, region or substrate is referred to as being "on" another element, it may be directly on the other element or intervening elements may also be present. In contrast, when an element is referred to as being "directly on" another element, there are no intervening elements present. Further, it will also be understood that when an element such as a layer, film, region or substrate is referred to as being "below" another element, it may be directly below the other element, or intervening elements may also be present. In contrast, when an element is referred to as being "directly below" another element, there are no intervening elements present.

A busbar and battery module 1000 according to the invention will be described in detail with reference to the drawings.

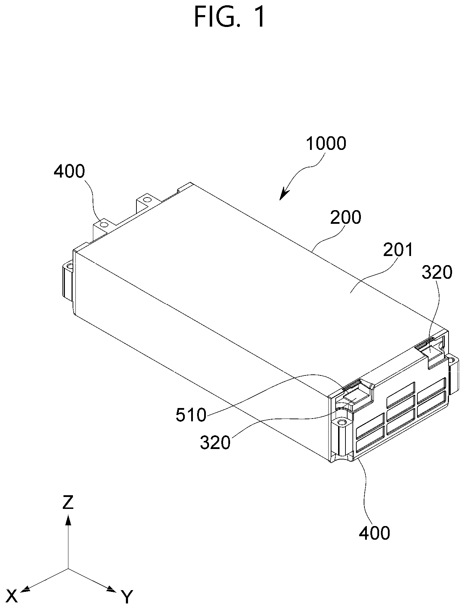

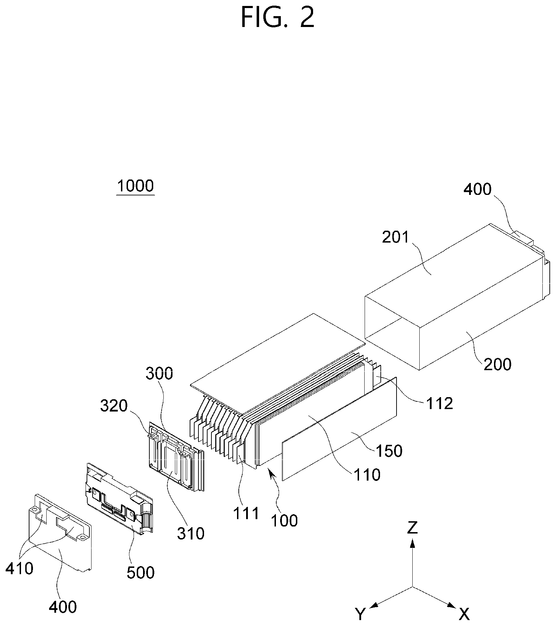

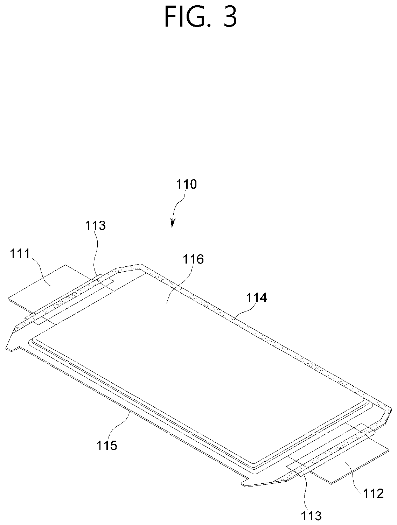

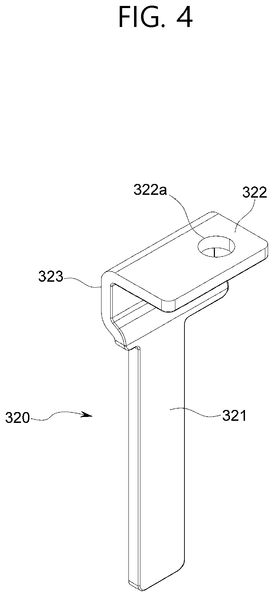

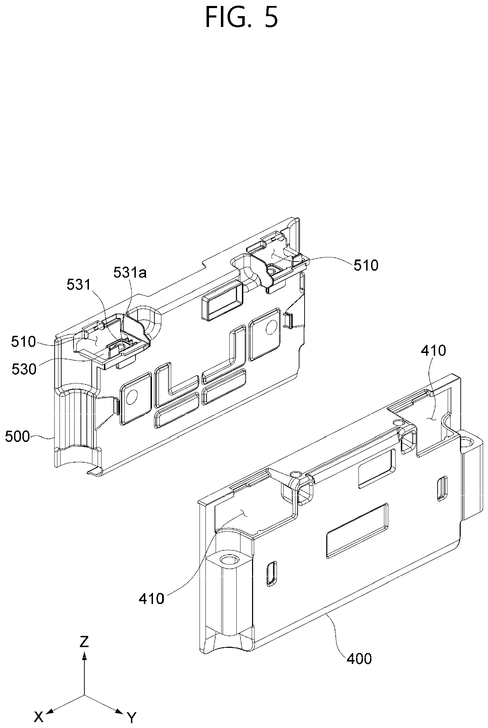

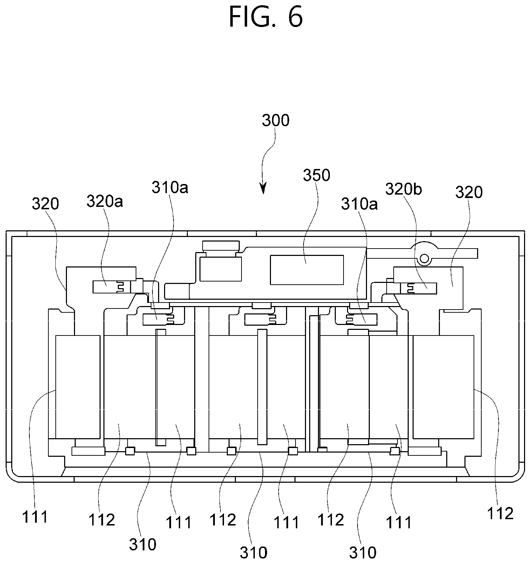

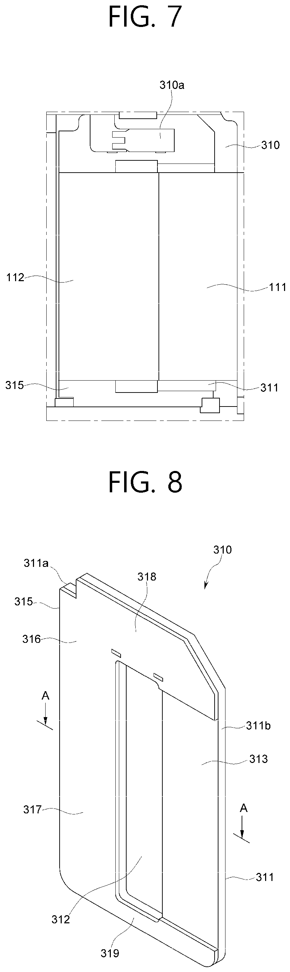

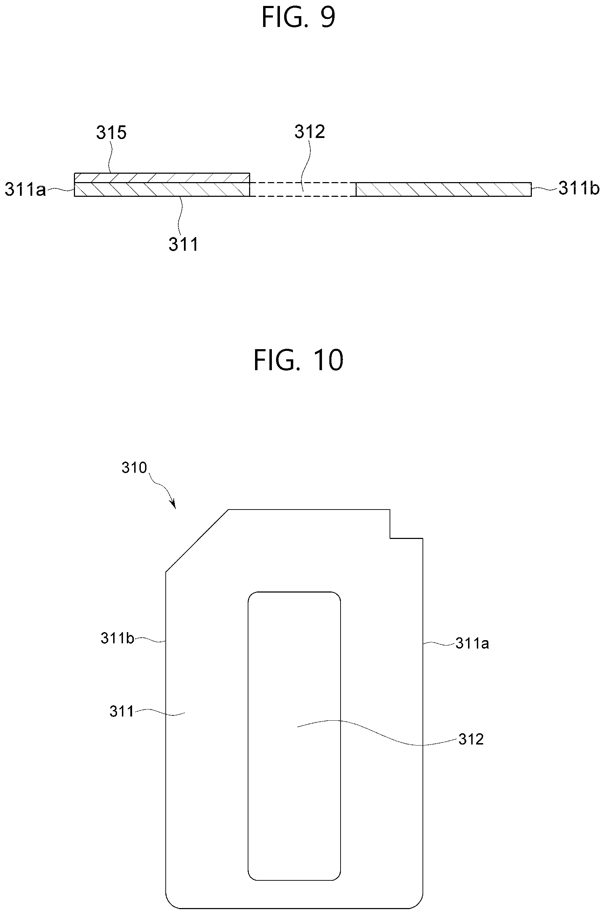

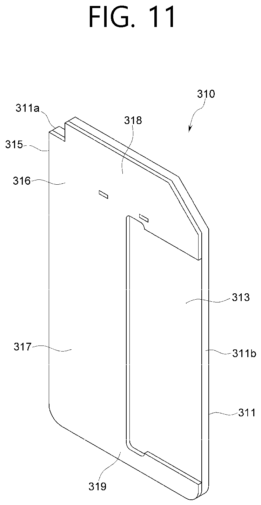

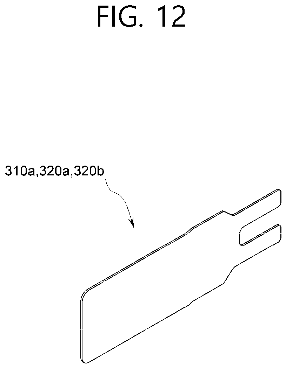

FIG. 1 is a perspective view of a battery module according to the invention. FIG. 2 is an exploded perspective view of the battery module of figure 1. FIG. 3 is a perspective view of a battery cell of the battery module of figure 1. FIG. 4 is a perspective view of a terminal busbar of the battery module of figure 1. FIG. 5 is a perspective view of an insulating cover and an end plate of the battery module of figure 1. FIG. 6 is a detailed view of a busbar frame of the battery module of figure 1. FIG. 7 is a diagram illustrating a busbar to which electrode leads are coupled in the battery module of figure 1. FIG. 8 is a diagram illustrating a busbar of the battery module of figure 1. FIG. 9 is a cross-sectional view taken along line A-A in FIG. 8. FIG. 10 is a rear view of FIG. 8. FIG. 11 is a diagram illustrating a busbar in another embodiment of the present disclosure. FIG. 12 is a diagram illustrating a busbar (terminal busbar) bonding plate of the battery module of figure 1.

The battery module 1000 includes: a battery cell stack 100 in which a plurality of battery cells 110 are stacked; a module case 200 for accommodating the battery cell stack 100; a busbar frame 300 located on one side and/or the other side of the battery cell stack 100; an insulating cover 500 disposed outside the busbar frame 300; and an end plate 400 disposed outside the insulating cover 500.

The battery cell stack 100 is formed by stacking the plurality of battery cells 110 along one direction, and the plurality of battery cells 110 are electrically connected. The direction in which the plurality of battery cells 110 are stacked is an X-axis direction (or -X-axis direction) in FIG. 2.

A direction from the front surface toward the rear surface of the battery cell stack 100, or the opposite direction, is defined as a length direction of the battery cell stack 100, and is a Y-axis direction in the drawings. Additionally, a direction from the upper surface toward the lower surface of the battery cell stack 100, or the opposite direction, is defined as a width direction of the battery cell stack 100, and is a Z-axis direction in the drawings.

The length direction of the battery cell stack 100 may be substantially the same as the length direction of the battery cell 110. Electrode leads 111 and 112 of the battery cell 110 are located on the front and rear surfaces of the battery cell stack 100, and busbars 310 and 320 of the battery module 1000 are disposed close to the front and rear surfaces of the battery cell stack 100 to easily form an electrical connection with the electrode leads 111 and 112.

The battery cells 110 may be provided as pouch-type battery cells, and the number of pouch-type battery cells stacked per unit area may be maximized. However, the battery cell 110 does not necessarily have to be provided in a pouch shape, and may be provided in a prismatic shape, a cylindrical shape, or various other shapes.

The battery cell 110 provided in a pouch type includes an electrode assembly and a cell case 115 that accommodates the electrode assembly (*see* FIG. 3).

The cell case 115 of the battery cell 110 is for accommodating the electrode assembly and may be a pouch-type cell case 115. The cell case 115 includes a lower case and an upper case that covers the lower case, and the upper and lower cases may be formed as one piece. Additionally, as illustrated in FIG. 3, the connecting portion of the upper and lower cases may be bent and folded. In addition, as illustrated, the upper case completely covers the lower case and a sealing portion 114 may be formed around the periphery.

Both the upper and lower cases may be made of a laminate structure including an inner coating layer, a metal layer, and an outer coating layer. The inner coating layer is located inside the cell case 115 based on the metal layer, and is in direct contact with the electrode assembly and thus is required to have insulation and electrolytic resistance. In addition, for sealing from the outside, sealing properties, that is, the sealing region where the inner layers are heat bonded to each other, are required to have excellent thermal adhesive strength. The metal layer is located between the inner coating layer and the outer coating layer and serves as a barrier layer that prevents moisture or various gases from penetrating into the battery from the outside. Aluminum (Al) thin film, which is light and has excellent formability, may be used as a preferred material for the metal layer in contact with the inner coating layer. The outer coating layer is located on the outside of the cell case 115 based on the metal layer. This outer coating layer may use a heat-resistant polymer with excellent tensile strength, moisture permeability prevention properties, and air penetration prevention properties to protect the electrode assembly and secure heat resistance and chemical resistance. For example, nylon or polyethylene terephthalate may be used.

Accommodation grooves 116 may be formed in the upper and lower cases, respectively, and the electrode assembly may be stored in the accommodation grooves 116 of the upper and lower cases.

The electrode assembly stored in the cell case 115 may be one from the group configured of a jelly-roll type electrode assembly made of a long sheet-shaped positive electrode and negative electrode with a separation membrane interposed therebetween and then wound, a stacked type electrode assembly configured of unit cells in which a rectangular positive electrode and negative electrode are stacked with a separation membrane interposed therebetween, a stack-folding type electrode assembly in which unit cells are wound by a long separation film, or a lamination-stack type electrode assembly in which unit cells are stacked with a separation membrane interposed therebetween and attached to each other.

In addition, the electrode assembly may include two electrode tabs and two electrode leads 111 and 112 respectively connected to the electrode tabs by welding portions.

One of the two electrode leads 111 and 112 may be a positive electrode lead connected to a positive electrode tab, and the other electrode lead 111 and 112 may be a negative electrode lead connected to a negative electrode tab. For example, the electrode lead 111 of a positive electrode may be made of aluminum (Al), and the electrode lead 112 of a negative electrode may be made of copper (Cu).

A lead film 113 may be attached to the electrode leads 111 and 112, respectively. The lead film 113 coupled to the electrode leads 111 and 112 is located between the electrode leads 111 and 112 and the cell case 115 to prevent a short circuit between the electrode leads 111 and 112 and the cell case 115 and prevent leakage of electrolyte by improving sealing power.

The two electrode leads 111 and 112 are illustrated as being disposed on both sides of the electrode assembly, but depending on the disposition of the electrode tabs, the two electrode leads 111 and 112 may be disposed on only one side of the electrode assembly.

The module case 200 protects the battery cell stack 100 and the electrical equipment connected thereto from external physical impact, and the module case 200 accommodates the battery cell stack 100 and the electrical equipment connected thereto in the inner space of the module case 200.

The structure of the module case 200 may vary, and for example, the structure of the module case 200 may be a structure of a mono frame. Herein, the mono frame may be in the form of a metal plate in which an upper surface, a lower surface, and both side surfaces are integrated. The mono frames may be manufactured by extrusion molding. As another example, the structure of the module case 200 may be a structure in which a U-shaped frame and an upper plate (an upper surface 201) are coupled. In the case of the structure in which the U-shaped frame and the upper plate are coupled, the structure of the module case 200 may be formed by coupling the upper plate with the upper side of the U-shaped frame, which is a metal plate having the lower surface and both side surfaces that are coupled or integrated, and each frame or plate may be manufactured by press molding. In addition, the structure of the module case 200 may be provided in the structure of an L-shaped frame in addition to the mono frame or the U-shaped frame, and may be provided in various structures not described in the aforementioned example.

The structure of the module case 200 may be provided in an opened form along a length direction of the battery cell stack 100. The front and rear surfaces of the battery cell stack 100 may not be covered by the module case 200. The electrode leads 111 and 112 of the battery cell 110 may not be covered by the module case 200. The front and rear surfaces of the battery cell stack 100 may be covered by the busbar frame 300, an end plate 400, or busbars 310 and 320 to be described later, and therethrough, the front and rear surfaces of the battery cell stack 100 may be protected from external physical impact.

A compression pad 150 may be located between the battery cell stack 100 and one side surface of the inner surface of the module case 200.

The compression pad 150 may be disposed in the battery cell stack 100 to face the outermost battery cell 110 of the battery cell stack 100 in an X-axis direction in the drawing.

In addition, although not shown, a thermal conductive resin may be injected between the battery cell stack 100 and the inner surface of the module case 200, and a thermally conductive resin layer (not shown) may be formed between the battery cell stack 100 and one surface of the inner surface of the module case 200 by the injected thermal conductive resin. In this connection, the thermal conductive resin layer may be located on a Z-axis of the battery cell stack 100, and the thermally conductive resin layer may be formed between the battery cell stack 100 and the bottom surface located on the -Z axis of the module case 200.

The busbar frame 300 may be located on one surface of the battery cell stack 100 to cover one surface of the battery cell stack 100 and to simultaneously guide the connection between the battery cell stack 100 and an external device. Specifically, as illustrated, the busbar frame 300 may be located on the front surface or the rear surface of the battery cell stack 100, and may be located on an upper surface, a lower surface, or a side surface thereof. At least one of the busbars 310 and 320 and a module connector may be mounted on the busbar frame 300. As illustrated in FIG. 2, one surface of the busbar frame 300 may be connected to one surface or the other surface of the battery cell stack 100, and the other surface of the busbar frame 300 may be connected to the busbars 310 and 320.

The busbar frame 300 may be made of an electrically insulating material or may include an insulating material. The busbar frame 300 may limit the contact of the busbars 310 and 320 with portions of the battery cells 110 other than the portions bonded to the electrode leads 111 and 112, and may prevent an electric short from occurring.

The busbar frame 300 may be located on one side and the other side of the battery cell stack 100, respectively.

FIG. 6 is a diagram illustrating the busbar frame 300 in one embodiment. The busbars 310 and 320 may be mounted on one surface of the busbar frame 300, and may be for electrically connecting the battery cell stack 100 or the battery cells 110, and an external device circuit. A plurality of the busbars 310 and 320 may be disposed. By positioning the busbars 310 and 320 between the battery cell stack 120 or the busbar frame 300 and the end plate 400, the busbars 310 and 320 may be protected from the external impact, and durability degradation due to external moisture may be minimized.

The busbars 310 and 320 may be electrically connected to the battery cell stack 100 through the electrode leads 111 and 112 of the battery cell 110.

Specifically, the electrode leads 111 and 112 of the battery cell 110 may be bent after passing through a lead slit formed in the busbar frame 300 to be connected to the busbars 310 and 320.

The busbar 310 is for electrically connecting the battery cells. As illustrated in FIGS. 6 and 7, the electrode leads 111 and 112 of the battery cell 110 are connected to both sides of the busbar 310, the electrode lead 111 connected to one side of the busbars 310 and 320 is a positive electrode lead, and the electrode lead 112 connected to the other side of the busbars 310 and 320 is a negative electrode lead.

In this embodiment, the busbar 310 may be a clad metal busbar made by bonding different types of metals. As the busbar, as illustrated in FIGS. 8 and 9, the busbar 310 may be configured by bonding a first conductor layer 311 and a second conductor layer 315, or may be formed by stacking the second conductor layer 315 on the first conductor layer 311. The busbar 310 may have a through hole 312 as shown in FIG.8. As an alternative, the busbar 310 may not have a through hole 312. FIG. 11 is a diagram illustrating a busbar without a through hole 312.

The fist conductor layer and second conductor layer are stacked metallic plates.

The first conductor layer 311 may have a generally rectangular shape.

The first conductor layer 311 has a first lateral edge 311a and a second lateral edge 311b, parallel and opposed to each other.

The first conductor layer 311 is made of a first metal, and the second conductor layer 315 is made of a second metal different from the first metal. The first metal may comprise aluminum (Al), and in particular be aluminum, and the second metal may comprise copper (Cu) and in particular be copper.

Alternatively, the first metal may be copper and the second metal, may be aluminum.

Alternatively, each of the first metal or second metal may comprise a quantity of an alloyed metal in addition to copper or aluminum.

The first conductor layer 311 may have the through hole 312 in the center as illustrated, and is formed with an exposed area 313 where the first metal is exposed as an area where the second conductor layer 315 is not stacked on one surface of the first conductor layer 311.

The electrode lead 111 of a positive electrode made of aluminum from the battery cell 110 is bonded to the exposed area 313, and the electrode lead 111 of a positive electrode is bonded and electrically connected to the first conductor layer 311 by welding in the exposed area 313.

The second conductor layer 315 is stacked on a main surface of the first conductor layer 311. The second conductor layer 315 covers a portion of one surface of the first conductor layer 311. As illustrated in FIGS. 8 and 9, the second conductor layer 315 is stacked on an area of the main surface of the first conductor layer 311 excluding the exposed area 313, and an exposed area 316 exposed to the outside from the second conductor layer 315 is formed in an area excluding the exposed area 313. In this embodiment, the second conductor layer 315 may be about 30-40% of the thickness of the first conductor layer 311, for example, about 1/3.

This feature is advantageous if the second metal is heavier and/or rarer than the first metal, for example if the first metal comprises aluminum and the second metal comprises copper, to reduce the weight of the busbar and ensure adequate weld strength.

The second conductor layer 315 may include a first portion 317, a second portion 318, and a third portion 319, and the first portion 317, the second portion 318, and the third portion 319 may be formed as one piece.

The first portion 317 may be disposed parallel to the exposed area 313 of the first conductor layer 311, and the through hole 312 may be disposed between the first portion 317 and the exposed area 313. The electrode lead 112 of a negative electrode may be bonded to the first portion 317.

The second portion 318 may be bent at one end of the first portion 317 and extend in the direction of the exposed area 313.

The third portion 319 may be bent at the other end of the first portion 317 and extend in the direction of the exposed area 313.

In other words, the second portion 318 and the third portion 319 may extend in parallel from both ends of the first portion 317 in the direction of the exposed area 313.

The first portion 317, the second portion 318, and the third portion 319 may form the exposed area 316 in the second conductor layer 315.

In this embodiment, the exposed area 313 where the first conductor layer 311 is exposed and the exposed area 316 where the second conductive portion 315 is exposed are disposed together on one side of the busbar 310. The electrode lead 111 of a positive electrode is bonded to the exposed area 313, and the electrode lead 112 of a negative electrode is bonded to the exposed area 316.

Accordingly, the electrode lead 111 of a positive electrode of aluminum may be bonded to the first conductor layer 311 made of a first metal of aluminum, and the electrode lead 112 of a negative electrode of copper may be bonded to the second conductor layer 315 made of a second metal of copper.

When an electrode lead made of a metal of a different material from the busbar is bonded to the busbar, the incidence of cracks may increase and weldability may deteriorate. In this embodiment, as described above, the electrode lead 111 of a positive electrode is bonded to the first conductor layer 311 made of the same metal material, and the electrode lead 112 of a negative electrode is bonded to the second conductor layer 315 made of the same metal material. Thereby, homogeneous bonding may reduce the incidence of cracks and improve weldability.

In addition, a busbar bonding plate 310a may be coupled to the second portion 318 of the second conductor layer 315 (*see* FIG. 12). The busbar bonding plate 310a may be connected to a connector (not shown), and the connector to which the busbar bonding plate 310a is connected may be connected to the connector 350 illustrated in FIG. 6. The connector 350 may be connected to a sensing portion (sensing plate) (not shown) and perform functions such as sensing the voltage of the battery cell 110.

In other words, the sensing portion may be connected to the busbar 310 through the busbar bonding plate 310a coupled to the busbar 310 and may sense the voltage of the battery cell 110.

In this embodiment, the busbar bonding plate 310a may be made of copper. Accordingly, the busbar bonding plate 310a may be homogeneously bonded to the second conductor layer 315 made of copper by welding, and weldability is improved.

The battery cells 110 configuring the battery cell stack 100 may be connected in series or parallel by the busbars 310 and 320.

The busbars 310 and 320 may include a terminal busbar 320 for electrically connecting one battery module 100 to another battery module 100.

In order to be connected to another battery module 100, at least a portion of the terminal busbar 320 may be exposed to the outside of the end plate 400, and the end plate 400 may be provided with a terminal opening 410 therefor.

One end (second portion 322) of the terminal busbar 320 may be exposed through an opening 510 of the insulating cover 500 and the terminal opening 410 of the end plate 400.

As illustrated in FIG. 4, the terminal busbar 320 may include a first portion 321 connected to the electrode leads 111 and 112 of the battery cell 110 and a second portion 322 exposed to the outside through the terminal opening 410. In addition, the terminal busbar 320 may further include a bending portion 323 formed between the first portion 321 and the second portion 322.

In the terminal busbar 320, the first portion 321 may be connected to the second portion 322 through the bending portion 323, and one surface of the first portion 321 and one surface of the second portion 322 may be perpendicular to each other. In other words, by forming the curved bending portion 323 on the terminal busbar 320, the second portion 322 may protrude and be seated on a seating portion 530 of the insulating cover 500, and the second portion 322 may be electrically connected to a pack busbar (not shown). A coupling hole 322a is formed in the second portion 322 configuring one end of the terminal busbar 320, and the second portion 322 of the terminal busbar 320 is fixed by a fixing pin (not shown) inserted into the coupling hole 322a.

In this embodiment, two terminal busbars 320 may be disposed on both sides of the busbar frame 300.

In the two terminal busbars 320, one terminal busbar 320 may be the terminal busbar 320 of a positive electrode (+), and the other may be the terminal busbar 320 of a negative electrode (-).

In this embodiment, the terminal busbar 320 on the left side of FIG. 6 may be the terminal busbar 320 of a positive electrode (+) and may be made of aluminum (Al).

The electrode lead 111 of a positive electrode made of aluminum may be bonded to the terminal busbar 320 made of aluminum on the left side, and weldability may be improved by bonding metals of the same type.

In FIG. 4, the electrode lead 111 may be bonded to the first portion 321 of the terminal busbar 320 by welding. The terminal busbar 320 may be nickel-plated (Ni plating) or tin-plated (Sn plating).

In addition, a terminal busbar bonding plate 320a may be coupled to the bending portion 323 of the terminal busbar 320 (*see* FIG. 12).

The terminal busbar bonding plate 320a may be connected to a connector (not shown) in the same manner as the busbar bonding plate 310a, and the connector connected to the terminal busbar bonding plate 320a may be connected to the connector 350 illustrated in FIG. 6. The connector 350 may be connected to the sensing portion (the sensing plate) (not shown) and may perform functions such as sensing the voltage of the battery cell 110.

In other words, the sensing portion may be connected to the terminal busbar 320 through the terminal busbar bonding plate 320a coupled to the terminal busbar 320 and may sense the voltage of the battery cell 110.

In this embodiment, the terminal busbar bonding plate 320a may be made of aluminum. Accordingly, homogeneous bonding may be performed on the terminal busbar 320 of a positive electrode made of aluminum by welding, and weldability may be improved.

In FIG. 6, the terminal busbar 320 on the right side may be the terminal busbar 320 of a negative electrode (-) and may be made of copper (Cu).

The electrode lead 112 of a negative electrode made of copper may be bonded to the terminal busbar 320 made of copper on the right side, and weldability may be improved by bonding metals of the same type.

In addition, a terminal busbar bonding plate 320b may be coupled to the terminal busbar 320 on the right side.

The terminal busbar bonding plate 320b may be connected to a connector (not shown) in the same manner as the busbar bonding plate 310a, and the connector connected to the terminal busbar bonding plate 320b may be connected to the connector 350 illustrated in FIG. 6. The connector 350 may be connected to the sensing portion (the sensing plate) (not shown) and may perform functions such as sensing the voltage of the battery cell 110.

In this embodiment, the terminal busbar bonding plate 320b may be made of copper. Accordingly, homogeneous bonding may be performed on the terminal busbar 320 of a positive electrode made of copper by welding, and weldability may be improved.

The end plate 400 may be used to protect the battery cell stack 100 and the electrical equipment connected thereto from external physical impact by covering the open surface of the module case 200. To this end, the end plate 400 may be made of a material having a predetermined strength. For example, the end plate 400 may include a metal such as aluminum or a plastic material.

The terminal opening 410 may be formed in the end plate 400. The terminal opening 410 may be disposed on both sides of the end plate 400, and a portion of the insulating cover 500 and one end (second portion 322) of the terminal busbar 320 (the second portion 322) may be exposed through the terminal opening 410.

Additionally, a connector opening may be located between the terminal openings 410 located on both sides of the end plate 400, and the module connector may be exposed to the outside through the connector opening.

The end plate 400 may be coupled to the module case 200 while covering the busbar frame 300 or the busbars 310 and 320 located on one surface of the battery cell stack 100. Each corner of the end plate 400 may be coupled to the corresponding corner of the module case 200 by methods such as welding, bolt fastening, and hook fastening.

The end plate 400 may be located on one surface and the other surface of the module case 200, respectively, to cover both surfaces of the battery cell stack 100. In this embodiment, an example is illustrated in which the end plate 400 is located on the front and back surfaces of the module case 200.

The insulating cover 500 may be disposed inside the end plate 400 and outside the busbar frame 300. In addition, the insulating cover 500 for electrical insulation may be located between the end plate 400 and the busbar frame 300. In other words, the busbar frame 300, the insulating cover 500, and the end plate 400 may be sequentially located outward from the battery cell stack 100. Like the end plate 400, the busbar frame 300 and the insulating cover 500 may each be configured in a plural number.

The insulating cover 500 may be made of an electrical insulating material or may include an insulating material and may block the busbars 310 and 320 from contacting the end plate 400.

The insulating cover 500 may include the opening 510 and the seating portion 530. The openings 510 may be disposed on both sides of an upper portion of the insulating cover 500, and one end (the second portion 322) of the terminal busbar 320 may be exposed through the openings 510.

In addition, the connector opening may be located between the openings 510 located on both sides of the insulating cover 500, and the module connector may be exposed to the outside through the connector opening.

The insulating cover 500 may be located on an inner surface of the end plate 400 and may be in close contact with the inner surface of the end plate 400, but this is not necessarily so.

As described above, one end (the second portion 322) of the terminal busbar 320 may be exposed through the opening 510, and one end (the second portion 322) of the exposed terminal busbar 320 may be seated on the seating portion 530. Accordingly, the seating portion 530 may be disposed adjacent to the opening 510 and may be disposed on an upper outer side surface thereof.

The second portion 322 of the terminal busbar 320 may be seated on the upper surface of the seating portion 530, and thus the upper surface of the seating portion 530 may form a seating surface. Additionally, as illustrated in FIG. 5, the seating portion 530 may include a fixing member 531 for fixing the terminal busbar 320.

The fixing member 531 may fix the second portion 322 of the terminal busbar 320 and may include a fixing hole 531a.

The fixing pin (not shown) may be inserted into the fixing hole 531a. The fixing pin (not shown) inserted into the coupling hole 322a formed in the second portion 322 of the terminal busbar 320 is coupled and fixed to the fixing hole 531a, so that the second portion 322 of the terminal busbar 320 may be fixed to the insulating cover 500.

Accordingly, the second portion 322 of the terminal busbar 320 is seated on the seating portion 530 of the insulating cover 500, and the second portion 322 is seated and comes into contact with the fixing member 531 disposed on the seating portion 530.

In addition, a terminal cover portion (not shown) that covers one end (the second portion 322) of the exposed terminal busbar 320 may be disposed on the insulating cover 500.

The electrical connection between battery modules 1000 may be made through the pack busbar (not shown). The pack busbar is a member for connecting one battery module 1000 to another adjacent battery module 1000 or a BDU (Battery Disconnection Unit), and may be connected to the exposed one end (the second portion 322) of the terminal busbar 320. For example, the pack busbar may be overlapped and connected to an upper portion of one end (the second portion 322) of the terminal busbar 320.

After one end of the pack busbar is disposed overlapping the second portion 322 of the terminal busbar 320, the fixing pins are sequentially inserted into the coupling hole of the pack busbar and the coupling hole 322a of the second portion 322 of the terminal busbar 320. Then, the fixing pin is fixed to the fixing groove 531a of the seating portion 530, allowing the pack busbar to be connected to the terminal busbar 320.

In addition, the second portion 322 of the terminal busbar 320 together with the pack busbar may be fixed to the insulating cover 500 by the fixing pin.

As described above, one or more battery modules 1000 according to an embodiment of the present disclosure may form a battery pack. The battery pack according to an embodiment of the present disclosure may accommodate at least one battery module 1000 inside a pack case, and may include various control and protection systems such as a battery management system (BMS) and a cooling system.

The battery module 1000 and battery pack according to an embodiment of the present disclosure configured in this way may be applied to various devices. Specifically, the battery module 1000 and battery pack may be applied to transportation such as electric bicycles, electric cars, and hybrid cars, or ESS (Energy Storage System), but is not limited thereto and may be applied to various devices that may use secondary batteries.

Although the present disclosure has been described above with reference to preferred embodiments, but is not limited to the aforementioned embodiments. It will be understood by those skilled in the art to which the present disclosure pertains that various modifications and changes may be made to the present disclosure without departing from the spirit of the present disclosure.

**[Detailed Description of Main Elements]**

| | | | |
|---|---|---|---|
| 1000: | Battery module | 100: | Battery cell stack |
| 110: | Battery cells | 200: | Module case |
| 300: | Busbar frame | 310: | Busbar |
| 311: | First conductor layer | 315: | Second conductor layer |
| 320: | Terminal busbar | 400: | End plate |
| 500: | Insulating cover | | |

## Claims

1. A busbar (310), comprising:
a first conductor layer (311) made of a first metal, the first conductor layer having a first lateral edge (311a) and a second lateral edge (311b) opposite the first lateral edge (311a), and a main surface extending between the first and second lateral edges; and
a second conductor layer (315) made of a second metal different from the first metal and stacked and fixed to the main surface of the first conductor layer (311),
wherein, on one surface of the first conductor layer (311) to which the second conductor layer (315) is fixed, the first conductor layer (311) has an exposed area where the first metal is exposed,
wherein the second conductor layer (315) extends from the first lateral edge of the first conductor layer (311) toward the second lateral edge, leaving an exposed area (313) of the first conductor layer (311) where the first metal is exposed, said exposed area (313) of the first conductor layer (311) extending from the second lateral edge of the first conductor layer (311) toward the first lateral edge.

2. The busbar of claim 1, wherein the first metal or the second metal comprises aluminum.

3. The busbar of claim 1, wherein the first metal or the second metal comprises copper.

4. The busbar of any one of claims 1 to 3, wherein the first conductor layer (311) has a through hole.

5. The busbar of any one of claims 1 to 4, wherein the second conductor layer (315) comprises:
a first portion (317); and
second and third portions (318, 319) extending from both ends of the first portion toward the exposed area of the first conductor layer (311).

6. The busbar of claim 5, wherein the first portion (317) of the second conductor layer (315) is disposed parallel to the exposed area (313) of the first conductor layer (311).

7. The busbar of claim 5, wherein:
the first conductor layer (311) has a through hole (312), and the through-hole (312) is disposed between the first portion of the second conductor layer (315) and the exposed area (313) of the first conductor layer (311).

8. A battery module (1000), comprising:
a battery cell stack (100) in which a plurality of battery cells (110) are stacked;
a module case (200) for accommodating the battery cell stack (100); and
a busbar (310) for electrically connecting the battery cells (110),
wherein the busbar (310) comprises:
a first conductor layer (311) made of a first metal, the first conductor layer having a first lateral edge and a second lateral edge opposite the first lateral edge, and a main surface extending between the first and second lateral edges; and
a second conductor layer (315) made of a second metal different from the first metal and stacked and fixed to the main surface of the first conductor layer (311), wherein:
the second conductor layer (315) extends from the first lateral edge of the first conductor layer (311) toward the second lateral edge, leaving an exposed area (313) of the first conductor layer (311) where the first metal is exposed, said exposed area (313) of the first conductor layer (311) extending from the second lateral edge of the first conductor layer (311) toward the first lateral edge,
an electrode lead of the battery cell (110) made of the first metal is coupled to the exposed area (313) of the first conductor layer (311); and
an electrode lead of the battery cell (110) made of the second metal is coupled to the second conductor layer (315).

9. The battery module (1000) of claim 8, wherein the first metal or the second metal comprises aluminum.

10. The battery module (1000) of claim 8 or 9, wherein the first metal or second metal comprises copper.

11. The battery module (1000) of any one of claims 8 to 10, wherein the first conductor layer (311) has a through hole (312).

12. The battery module (1000) of any one of claims 8 to 11, wherein:
the battery module (1000) further comprises a terminal busbar (320) made of the first metal; and
the electrode lead of the battery cell (110) made of the first metal is coupled to the terminal busbar (320).

13. The battery module (1000) of any one of claims 8 to 12, wherein:
the battery module (1000) further comprises a terminal busbar (320) made of the second metal; and
the electrode lead of the battery cell (110) made of the second metal is coupled to the terminal busbar (320).

14. The battery module (1000) of any one of claims 8 to 13, wherein:
the battery module (1000) further comprises a busbar frame (300) disposed on one side of the battery cell stack (100); and
the busbar (310) is disposed on the busbar frame (300).
